Europäisches Patentamt

European Patent Office

Office européen des brevets

(19)

(11) Numéro de publication: **0 210 898 B1**

# (12) FASCICULE DE BREVET EUROPEEN

(45) Date de publication de fascicule du brevet: **15.04.92**   (51) Int. Cl.5: **G09G 3/20**, **H04N 3/14**

(21) Numéro de dépôt: **86401483.2**

(22) Date de dépôt: **03.07.86**

(54) **Dispositif d'affichage comportant un réseau matriciel de sources lumineuses.**

(30) Priorité: **03.07.85 FR 8510177**

(43) Date de publication de la demande:
**04.02.87 Bulletin 87/06**

(45) Mention de la délivrance du brevet:
**15.04.92 Bulletin 92/16**

(84) Etats contractants désignés:
**DE FR GB IT**

(56) Documents cités:
**DE-A- 1 942 267**
**DE-A- 2 149 688**
**DE-A- 2 942 777**
**US-A- 3 609 747**

**THE MARCONI REVIEW, vol. 35, no. 184, 1972, pages 24-41, Chelmsford, Essex, GB; G.V. BUNTON et al.: "Chalcogenide switching devices"**

(73) Titulaire: **SAYAG ELECTRONIC**
**1090, Route Nationale Bucy Saint Liphard**
**F-45140 Saint Jean La Ruelle(FR)**

(72) Inventeur: **Loret, Marc**
**19, Avenue Verdier**
**F-92120 Montrouge(FR)**
Inventeur: **Bouquet, Daniel**
**7, Cité Hittorf**
**F-75010 Paris(FR)**
Inventeur: **Le Pen, Yannick Les Plaisances**
**Rue Louise Michel prolongée Bâtiment 2A**
**F-78200 Mantes-la Ville(FR)**

(74) Mandataire: **Fort, Jacques et al**
**CABINET PLASSERAUD 84, rue d'Amsterdam**
**F-75009 Paris(FR)**

Rank Xerox (UK) Business Services

## Description

L'invention a pour objet un dispositif d'affichage du type comportant des sources lumineuses réparties en grand nombre suivant un réseau matriciel et des moyens de commutation permettant d'appliquer sélectivement une alimentation électrique aux sources. L'invention trouve de nombreuses applications dans le domaine des panneaux lumineux lisibles à distance et fournissant des indications graphiques ou alphanumériques, fixes ou mobiles.

On connaît déjà de tels dispositifs d'affichage. Lorsque le dispositif comprend un nombre élevé de sources, on réalise un multiplexage temporel consistant à commander successivement l'allumage des sources appropriées de lignes successives, ce qui permet de commander m x n sources à l'aide de m + n éléments de puissance seulement. On compte sur la rémanence des sources alimentées et sur la persistance des impressions rétiniennes pour éviter une sensation de scintillement.

Cette solution présente de graves inconvénients : la luminosité apparente de chaque source est réduite par rapport à sa luminosité à l'état alimenté en permanence. Il est nécessaire d'adopter une fréquence de rafraîchissement élevée.

On connaît également des dispositifs d'affichage dont chaque source lumineuse est constituée par une diode électroluminescente ou DEL en série avec un organe de commutation. On a notamment recherché une simplicité maximale. Pour cela (DE-A-2 942 777), on a proposé d'utiliser, à chaque croisement entre un conducteur de ligne et un conducteur de colonne, un montage en série d'une DEL et d'un élément de commutation qui devient conducteur lorsque la tension à ses bornes dépasse une valeur déterminée, et qui reste conducteur jusqu'à ce que cette tension ait diminué au-dessous d'une seconde valeur déterminée. Les conducteurs sont reliés à des interfaces de ligne et de colonne qui commandent les tensions. Mais cette approche présente des inconvénients qui la rendent pratiquement inutilisable. Chaque interface doit permettre de porter la tension sur les conducteurs à l'une quelconque de trois valeurs différentes. Toute la puissance nécessaire au fonctionnement des DEL passe par les conducteurs et les interfaces, ce qui complique les interfaces et rend presque impossible de maintenir les trois tensions requises pour le fonctionnement au niveau nécessaire de stabilité tout le long des conducteurs en dépit des variations possibles du nombre de DEL allumées.

On peut faire des remarques similaires à propos des autres dispositifs dans lesquels chaque source de lumière est à la fois commandée et alimentée par un conducteur de ligne et un conducteur de colonne, par exemple ceux décrits dans les documents DE-A-2 149 688 et l'article de MARCONI REVIEW, Vol. 35, No. 184, 1972, pp. 24-41.

L'invention vise notamment à fournir un dispositif d'affichage optique comportant des éléments d'émission de lumière, avantageusement des DEL, en tant que sources, répondant mieux que ceux antérieurement connus aux exigences de la pratique, notamment en ce qu'il permet d'atteindre une luminosité apparente très proche de la luminosité maximale, d'adopter une fréquence de balayage modérée, compatible notamment avec les fréquences habituelles de balayage télévision, d'écarter dans une large mesure les problèmes dûs aux variations éventuelles de tension suivant le nombre de sources allumées, et de faire varier, en cas de besoin, la brillance générale du dispositif.

Dans ce but, l'invention propose notamment un dispositif du type ci-dessus défini, conforme à la revendication 1.

Ce dispositif est particulièrement utilisable pour constituer des dispositifs d'affichage dont la taille n'excède pas quelques mètres carrés. Il permet de n'utiliser que deux tensions seulement sur les conducteurs de colonne, ces tensions ne remplissant qu'une fonction de commande et pouvant donc être réglées de façon très précise. Les courants nécessaires au fonctionnement des DEL peuvent être fournis par un circuit d'alimentation séparé et par les conducteurs de ligne. L'inconvénient qui en découle en ce qui concerne la stabilité est cependant beaucoup plus limité que dans l'art antérieur, puisque seules les lignes peuvent le subir et qu'il n'y a pas de risque de commutation intempestive. De plus, l'un des niveaux à réaliser sur les conducteurs de ligne correspond à la coupure, c'est-à-dire à l'absence de tout courant.

L'invention propose également un dispositif conforme à la revendication 5, particulièrement adapté à la réalisation de panneaux de très grande taille, pouvant comporter plusieurs dizaines de milliers de DEL. Ce dispositif garantit une indépendance pratiquement complète des courants et des tensions. Les circuits intégrés commandent chacun 2k DEL (k étant un nombre entier) qui peuvent être réparties autour de l'emplacement physique du circuit intégré correspondant. Le regroupement des conducteurs de colonne correspondant à un même circuit intégré sous forme d'un bus facilite l'adressage.

On voit que le circuit associé directement aux DEL remplit deux buts : il assure le stockage de l'information pendant une période de temps indéfinie et constitue un interface entre source de lumière et alimentation.

Quel que soit le mode de réalisation adopté, le dispositif peut fonctionner en effectuant une commande simultanée de toutes les sources de lumière dans une même ligne. Les lignes peuvent être commandées en succession ou on peut utiliser un entrelacement.

Un dispositif selon l'invention peut être utilisé pour l'affichage graphique ou pour la reproduction d'images de télévision. Chaque source de lumière peut comporter un seul émetteur ou plusieurs émetteurs à des longueurs d'onde différentes dans le visible, ce qui permet d'obtenir des affichages en couleur. Il est également possible, et avantageux lorsqu'on doit afficher des images de télévision, de munir l'élément électroluminescent (ou les éléments) constituant chaque source de moyens susceptibles de fournir, en fonction d'une commande appropriée, l'un quelconque de plusieurs courants. On peut ainsi donner à chaque source l'une quelconque de plusieurs brillances, en nombre suffisant pour la restitution acceptable d'images de télévision ou, plus généralement d'images présentant des valeurs de gris. Tous les pixels d'une même ligne de balayage peuvent être stockés dans un registre à décalage de colonne et utilisés pour commander les éléments électroluminescents d'une ligne respective au cours de la période de retour ligne du signal de télévision.

En utilisant par exemple trois éléments qui fournissent des courants dans les rapports 1, 2 et 4 lorsqu'ils sont conducteurs, il est possible de donner, à une source ayant une luminosité proportionnelle au courant, une luminance ayant l'un quelconque de huit niveaux.

L'invention sera mieux comprise à la lecture de la description qui suit de modes particuliers de réalisation donnés à titres d'exemples non limitatifs. La description se réfère aux dessins qui l'accompagnent, dans lesquels :

- la Figure 1 est un synoptique de principe montrant un fragment d'un dispositif suivant un premier mode de réalisation,
- la Figure 2 est un chronogramme montrant les signaux qui apparaissent à divers emplacements du dispositif de la Figure 1,
- la Figure 3 est un schéma montrant une des sources d'un dispositif suivant une variante de réalisation et du composant bistable qui lui est associé, permettant de donner à la source une luminosité quelconque parmi huit valeurs,
- la Figure 4 est une représentation schématique d'une portion d'un dispositif selon un autre mode de réalisation de l'invention ;
- la Figure 5 est un synoptique d'un des circuits intégrés utilisés dans le mode de réalisation de la Figure 4 ;
- la Figure 6 est un chronogramme montrant les signaux qui apparaissent lors d'une phase d'utilisation du dispositif de la Figure 4.

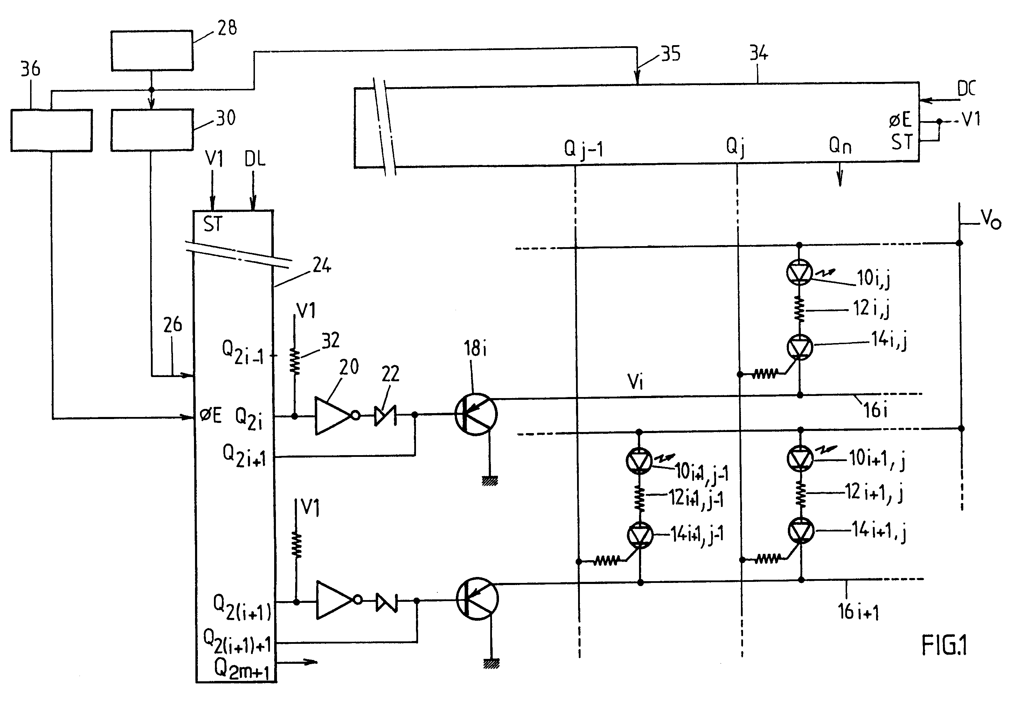

Le dispositif dont un fragment est montré en Figure 1 peut être regardé comme comportant m x n sources dont trois seulement, $10_{i,j}$, $10_{i+1,j}$ et $10_{i+1,j-1}$ sont représentés. On supposera que chaque source 10 est constituée par une DEL reliée en permanence à une source continue à tension VO (12 volts par exemple). Le circuit d'alimentation propre à chaque DEL comporte une résistance 12 en série avec le composant de commutation, représenté par un thyristor 14. Dans le montage illustré, à balayage ligne à ligne, tous les thyristors 14 d'une même ligne sont reliés à un conducteur commun $16_i$, $16_{i+1}$... dont la tension V est commandable pour pouvoir prendre plusieurs valeurs, dont au moins une est égale à VO et dont une autre est telle qu'elle permette de maintenir les thyristors à l'état conducteur une fois qu'ils sont amorcés. Par réglage de VO, on peut ajuster la luminosité du dispositif dans une plage relativement large, le thyristor constituant un pseudo-générateur de courant.

La commutation de ligne est effectuée par des circuits qui, dans le cas particulier donné à titre d'exemple sur la Figure 1, comprennent chacun un transistor de commutation. Le transistor de commutation $18_i$ par exemple a son émetteur relié au conducteur de ligne $16_i$ et son collecteur à la masse. La polarisation de base est assurée à partir des sorties $Q_{2i}$ et $Q_{2i+1}$ d'un circuit 24 de commutation de ligne. Pour cela, la base est reliée directement à la sortie $Q_{2i+1}$ et elle est reliée à la sortie $Q_{2i}$ par un montage en cascade comprenant un inverseur 20 et un élément à seuil 22 (diode zener en général). L'entrée de l'inverseur 20 est également reliée, par l'intermédiaire d'une résistance 32, au niveau logique V1 commun aux composants numériques du dispositif. L'élément de seuil est prévu pour fixer la polarisation du transistor 18 associé à une valeur telle que la tension Vi sur le conducteur de ligne $16_i$ ait alors une valeur bien déterminée VR (6 Volts par exemple), dont le rôle apparaîtra plus loin lors de la description du fonctionnement. Le circuit de commutation 24 peut être constitué par un simple registre à décalage dont l'entrée d'horloge 26 reçoit un signal élaboré à partir d'une base de temps commune 28 dans le cas illustré, fournie par un microprocesseur de commande dans le cas le plus fréquent. La base de temps sera généralement à la fréquence de balayage colonne et en conséquence le signal d'horloge appliqué au circuit 24 sera alors élaboré par un élément 30, qui peut être un diviseur associé à un monostable.

Le balayage colonne peut lui aussi être assuré par un registre à décalage 34 recevant, sur son entrée d'horloge 35, le signal provenant de la base de temps 28. L'entrée de porte ou "strobe" des registres 24 et 34 est mise au niveau logique V1 de façon à être excitée en permanence. L'entrée de validation ØE du registre 34 est également en permanence au niveau logique V1, tandis que l'entrée de validation ØE du registre 24 est reliée à un circuit de balayage 36 dont la fonction apparaîtra plus loin.

Le fonctionnement du dispositif qui vient d'être décrit est le suivant.

Un dispositif de remise à zéro (non représenté) peut être prévu pour que, dans l'état initial du système lors de la mise en tension, toutes les positions des registres 24 et 34 soient occupées par des zéros, les niveaux logiques sur toutes les sorties Q étant égaux à un, la sortie s'effectuant généralement par un transistor monté en émetteur commun, à collecteur ouvert. Sur chacune des lignes 16, la tension est égale à une valeur VR dite de maintien, la différence VO-VR étant choisie de façon à maintenir le thyristor correspondant 14 à l'état de conduction une fois qu'il a été amorcé, même si la polarisation de gâchette est supprimée.

La commande de toutes les sources d'une ligne à la fois s'effectue de la même façon. Celle correspondant à la ligne $16_i$ apparaît sur le chronogramme de la Figure 1.

Au cours de l'intervalle de temps qui se termine à l'instant $t_i$, les données correspondant à la ligne $16_i$ sont introduites en série par l'entrée de données DC du registre 34, à la cadence fixée par l'horloge appliquée sur l'entrée 35. A l'issue de cette opération, les positions du registre 34 sont occupées par des zéros et des uns correspondant à la répartition entre sources à allumer et sources à laisser éteintes.

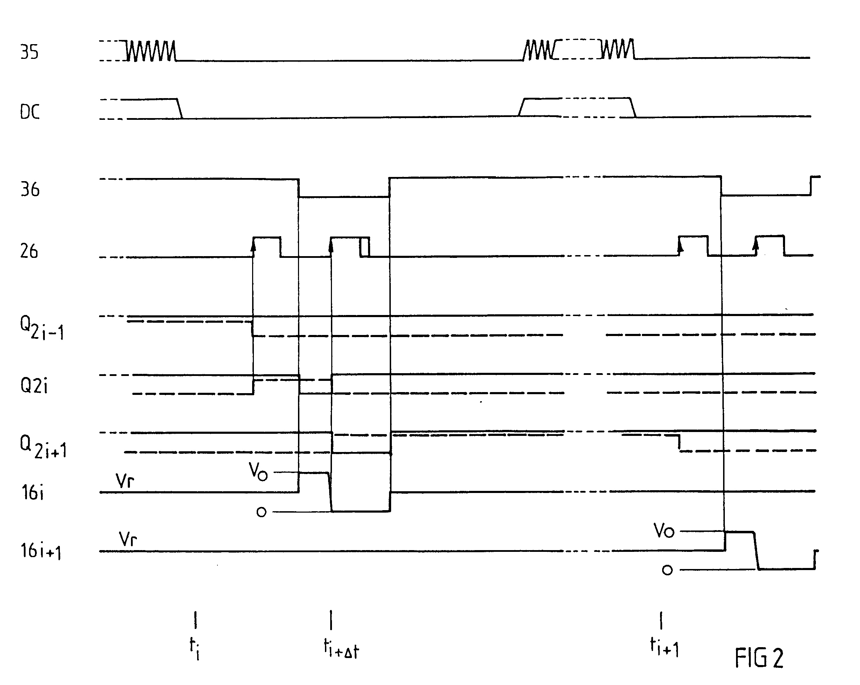

Le registre 24 intervient alors, sous la commande des circuits 36 et 30, pour reproduire dans la ligne $16_i$ la répartition mémorisée dans le registre 34. Le circuit 30 est prévu pour appliquer un premier coup d'horloge sur l'entrée 26 afin de commuter les bascules des positions 2i-1 et 2i du registre (lignes en tirets sur la Figure 2). Le circuit 36 est synchronisé avec l'horloge 28 de façon qu'une transition apparaisse sur l'entrée ØE après le coup d'horloge qui a provoqué la commutation des bascules d'ordre 2i-1 et 2i, ce qui évite l'adressage de la ligne précédente.

La transition provenant du circuit 36 provoque l'apparition, sur la sortie $Q_{2i}$, du niveau bas complément du niveau déjà mémorisé dans la bascule correspondante et le passage du transistor 18i à l'état bloqué. La tension Vi s'établit en conséquence à VO et toutes les sources de la ligne 16i s'éteignent.

Au coup d'horloge suivant, à l'instant ti + õt, il y a commutation de la bascule d'ordre 2i + 1 et passage de la sortie $Q_{2i+1}$ au niveau bas. Le transistor 18i passe à l'état saturé et la tension totale VO se trouve appliquée aux bornes de chaque montage en cascade d'un élément $10_i$, d'une résistance 12 et d'un thyristor 14. Les sorties parallèles du registre 34 appliquent en même temps sur les gâchettes des thyristors une tension ayant l'un ou l'autre de deux niveaux de commande et correspondant l'un à l'allumage, l'autre au maintien à l'état éteint.

Enfin, lors du retour de l'entrée de validation ØE du registre 24 à son état d'origine, les deux sorties $Q_{2i}$ et $Q_{2i+1}$ étant montées au niveau haut, la tension fournie par le transistor revient au niveau de maintien VR.

Le mode de fonctionnement qui vient d'être décrit n'est pas le seul possible et de nombreux autres types de commande, mettant en oeuvre des composants différents de ceux montrés en Figure 1, peuvent être adoptés.

Par ailleurs, le dispositif peut être associé à un circuit fournissant un signal de balayage télévision, en noir et blanc, le rapport cyclique d'allumage des sources excitées et la fréquence étant suffisamment élevés pour qu'on puisse accepter une cadence de balayage du réseau de sources à 50 Hz. Le circuit peut appartenir à un récepteur TV, à une caméra, à un magnétoscope, etc.

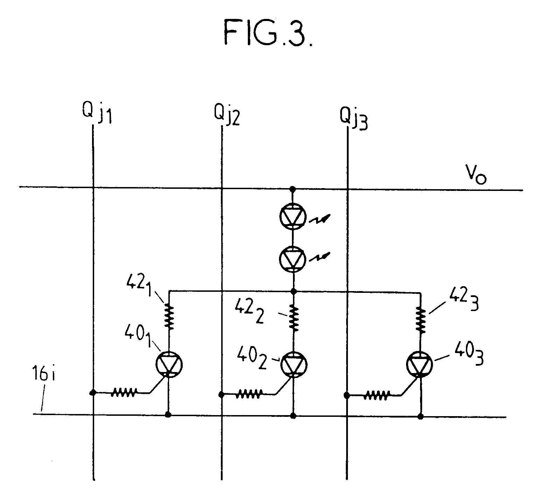

Comme cela a déjà été indiqué, il est possible de constituer chaque source et son organe de commutation associé de façon à disposer de plusieurs niveaux de luminosité. Dans le mode de réalisation montré en Figure 3, chaque source comporte deux diodes électroluminescentes en cascade. Ces deux diodes peuvent émettre sur la même longueur d'onde ou, au contraire, sur deux longueurs d'onde différentes pour disposer d'une couleur supplémentaire. Dans le cas illustré en Figure 3, chaque composant associé à une source comprend trois thyristors $40_1$, $40_2$ et $40_3$ montés en parallèle, chacun placé en série avec une résistance $42_1$, $42_2$ ou $42_3$. Les résistances ont avantageusement des valeurs en progression géométrique d'ordre 2, permettant de disposer de huit niveaux de luminosité. Chaque colonne, la colonne d'ordre j par exemple, comportera trois conducteurs de commande $Q_{j1}$, $Q_{j2}$ et $Q_{j3}$ et la donnée correspondant à chaque source du réseau matriciel sera constituée de trois bits appliqués chacun à l'une des trois lignes.

Cette disposition permet en particulier de reproduire les images de télévision en noir et blanc avec une quantification moins grossière que dans le cas de la Figure 1.

Les composants de commutation peuvent être autres que des thyristors, par exemple des composants dits "triac".

Il est possible d'obtenir un affichage en plusieurs couleurs en prévoyant, pour chaque source, plusieurs émetteurs de lumière commandés indépendamment et émettant sur des longueurs d'onde différentes. On peut par exemple disposer pour chaque source de trois couleurs avec deux émetteurs optiques seulement. Par ailleurs, le dispositif peut être réalisé en utilisant toutes les technologies usuelles, et en particulier en technologie hybride, sur support à couche épaisse.

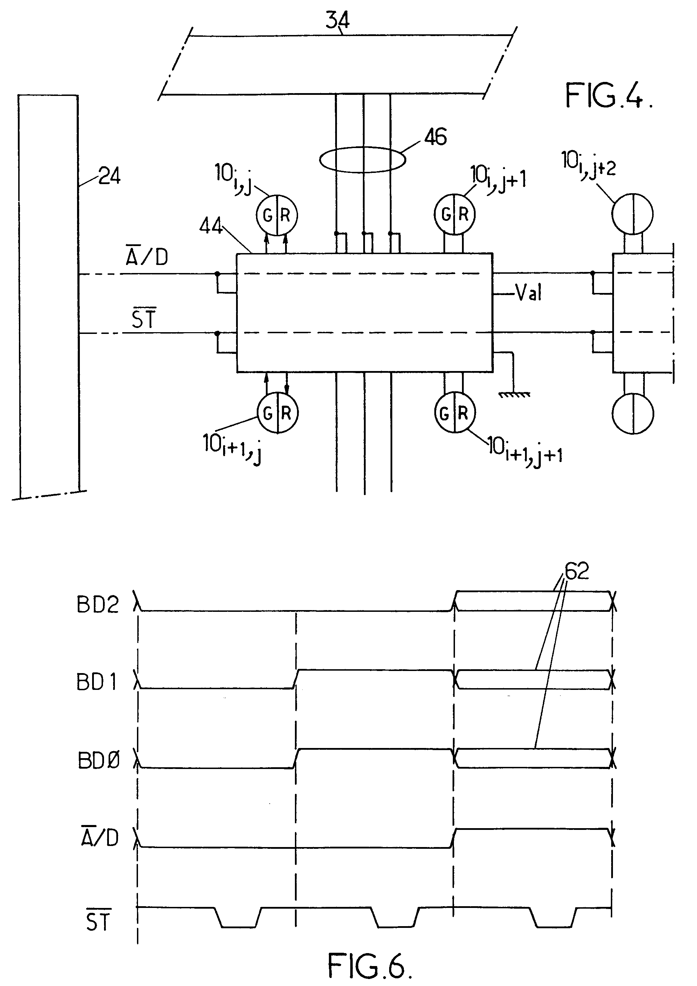

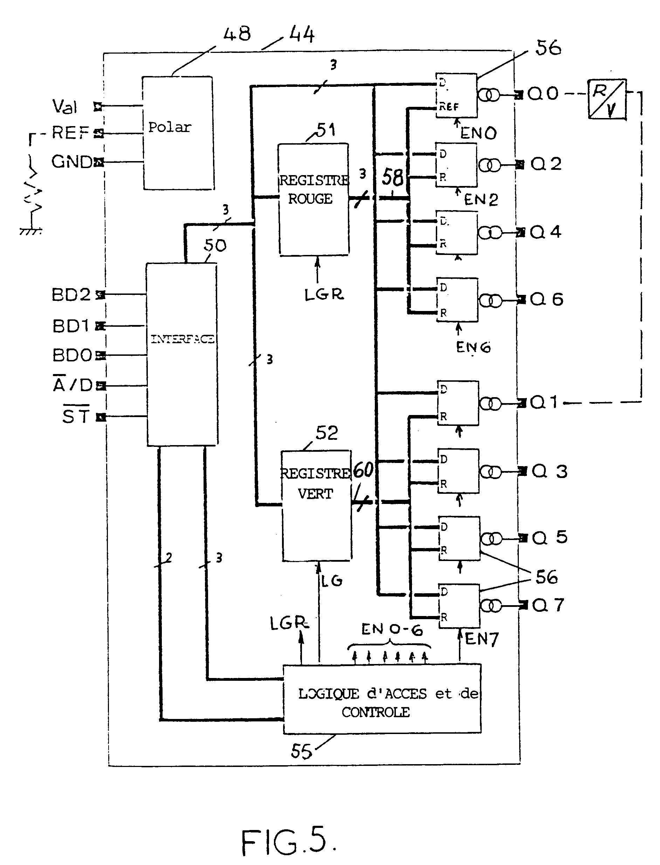

Les Figures 4 et 5 montrent un autre mode de réalisation, comportant des circuits intégrés associés chacun à 2k éléments électroluminescents dont on supposera qu'il s'agit de DEL bicolores. Ces DEL ont deux jonctions émettant à des longueurs d'onde différentes. Les deux émissions seront commandées séparément par le circuit 44.

On décrira d'abord les fonctions à remplir par un circuit 44 en faisant référence à la Figure 4, avant de donner une description de la constitution de ce circuit.

Le circuit 44 est prévu pour fournir un courant sélectionnable entre plusieurs intensités différentes à chacune des DEL. On supposera que le circuit est prévu pour fournir l'une de huit intensités, identifiées chacune par un nombre de trois éléments binaires ou "bits" à chaque jonction. Ces intensités sont dans un rapport mutuel prédéterminé et représentent des valeurs allant de 100% à 0% d'une intensité maximale déterminée. Le circuit 44 est de plus prévu pour permettre l'ajustement de cette intensité maximale déterminée, ce qui permet de régler la brillance globale de l'affichage, par exemple pour tenir compte de l'éclairage ambiant. Comme de plus la brillance d'une DEL pour un même courant injecté peut être différente dans le vert et dans le rouge, il peut être avantageux de régler les intensités maximales déterminées à des valeurs différentes pour le rouge et le vert.

Dans le cas montré en Figure 4, chaque circuit 44 est prévu pour n'avoir que seize broches. Il est en conséquence nécessaire d'utiliser une commande séquentielle. Cependant, des commandes en parallèle pourraient être possibles à condition d'accepter un nombre de broches accru.

Le circuit 44 de la Figure 4 comporte une liaison de masse et une connexion à la tension d'alimentation Val (5 Volts s'il y a une seule DEL par source, davantage dans la mesure où chaque source comporte plusieurs DEL en cascade). Le circuit 44 comporte également une borne (non représentée sur la Figure 4) reliée à la masse par l'intermédiaire d'une résistance de précision, destinée à fournir une tension de référence. Le circuit commande quatre DEL bicolores, disposées aux sommets d'un rectangle dans deux lignes et colonnes successives, en réponse à des signaux provenant d'interfaces 24 et 34.

Les signaux de colonne sont fournis sur les trois fils d'un bus de données et d'adresses 46 utilisé pour adresser chaque source à son tour (l'adressage exigeant deux bits pour identifier l'une des DEL 10 et un bit supplémentaire pour désigner le vert ou le rouge) et fournir les données respectives (courant à injecter).

Les signaux de ligne sont fournis sur deux conducteurs $\overline{A}/D$ et $\overline{ST}$. Le premier conducteur indique si le mot présenté sur le bus 46 est une adresse ou une donnée. Le conducteur $\overline{ST}$ fournit des signaux de validation ou "strobes".

L'intensité maximale déterminée peut être modifiée périodiquement. Pour indiquer que la valeur fournie sur le bus représente cette intensité maximale, on délivre deux adresses successives, ce qui est indiqué en maintenant le conducteur $\overline{A}/D$ au niveau logique bas pendant deux cycles successifs. Le réglage de l'intensité maximum pour les deux couleurs, pour le rouge seulement ou pour le vert seulement peut être réalisé au choix, suivant celui de trois codes d'adresse différents qui est présenté sur le bus.

La constitution interne du circuit 44 peut être celle montrée en Figure 5. Le circuit comprend un bloc de polarisation 48 qui fournit les tensions nécessaires à partir de la valeur de référence et de la tension d'alimentation Val. Les trois conducteurs BD0, BD1 et BD2 du bus 46 et les conducteurs de colonne $\overline{A}/D$ et $\overline{ST}$ sont reliés à un interface 50 d'adaptation d'impédance et de mise en forme comportant des bascules de Schmitt. On supposera que BD0 et BD2 désignent respectivement les bits de poids faible et de poids fort du mot appliqué sur le bus 46.

Deux registres identiques 51 et 52 sont prévus pour mémoriser les intensités maximales déterminées des courants, respectivement pour le rouge et le vert. Chaque signal de trois bits correspondant à BD0, BD1 et BD2 appliqué aux registres par le bus 54 est identifié par les registres comme étant une adresse ou une donnée suivant le niveau du signal appliqué au registre par une logique d'accès et de commande 55. Le bus 54 est également connecté à huit générateurs de courant programmables 56 alimentant chacun l'une des jonctions par l'intermédiaire de sorties Q0, Q2, Q4 et Q6 (rouge) et Q1, Q3, Q5 et Q7 (vert). Les générateurs de courant peuvent être d'un type commercial actuellement disponible. Ils reçoivent une information représentant l'intensité maximale déterminée, des registres 51 et 52, par des conducteurs respectifs 58 et 60. Les générateurs de courant 56 reçoivent des signaux de validation respectifs EN0,..., EN7 de la logique d'accès et de commande 55 qui décode les informations $\overline{A}/D$ et $\overline{ST}$. Si on suppose qu'un niveau logique bas sur $\overline{A}/D$ indique que l'information fournie par le bus 46 est une adresse, la commande des deux registres 51 et 52 pour ajuster l'intensité maximale au même niveau dans les deux registres peut se faire suivant le chronogrammme de la Figure 6. Pour indiquer que c'est l'intensité maximale qui va être donnée, on main-

tient le conducteur $\overline{A}$/D au niveau bas pendant deux cycles d'écriture successifs (quatrième ligne de la Figure 6). Les deux registres 51 et 52 sont simultanément adressés en leur appliquant successivement les mots 000 et 001 sur le bus 46 si on doit écrire la même valeur. L'écriture intervient lorsque le conducteur $\overline{ST}$ est au niveau logique bas. L'utilisation d'un signal de validation de durée appréciable plutôt que d'une transition pour provoquer l'écriture améliore la fiabilité. Au cours du troisième cycle, en 62, l'intensité maximale déterminée du courant est fournie et mémorisée sous forme d'un nombre de trois bits dans les deux registres.

On peut accéder de façon similaire au registre "rouge" 51 seulement, ou au registre "vert" 52 seulement en utilisant d'autres mots d'adresse, qui peuvent par exemple être 100, 111; et 111, 110.

Une fois que l'intensité maximale a été mémorisée, on peut commander individuellement chaque émetteur de lumière en adressant chaque émetteur à son tour au cours d'un premier cycle (conducteur $\overline{A}$/D au niveau bas) puis en indiquant le pourcentage du courant maximum parmi les huit valeurs disponibles ($\overline{A}$/D étant au niveau logique haut).

Il n'y a généralement pas d'avantage à prévoir un circuit intégré pour moins de quatre sources bicolores, ou huit sources monochromes ; par contre, on peut augmenter considérablement le nombre d'éléments électroluminescents associés à un même circuit intégré. Etant donné qu'à l'heure actuelle il n'existe pas de DEL émettant sur plus de deux longueurs d'onde différentes, il est nécessaire d'utiliser au moins deux émetteurs électroluminescents pour réaliser des panneaux d'affichage trichromes permettant d'obtenir des nuances intermédiaires. Les circuits intégrés peuvent être réalisés par une technologie traditionnelle, à l'heure actuelle avantageusement de type $I^2L$, afin d'assurer une précision satisfaisante aux courants fournis. Cependant, des circuits CMOS déjà commercialisés sont également utilisables lorsqu'on ne recherche pas une précision élevée sur les courants et les brillances et des circuits CMOS ou BIMOS spécifiques permettraient d'arriver à une précision élevée.

**Revendications**

1. Dispositif d'affichage optique comprenant un grand nombre de sources de lumière, avantageusement constituées de diodes électroluminescentes, réparties aux noeuds d'un réseau et associées chacune à un circuit électronique statique bistable permettant d'allumer la source en réponse à un signal de commande appliqué temporairement sur un conducteur de colonne correspondant à la source, caractérisé en ce que le circuit associé à chaque source (10) est constitué par au moins un thyristor (14) commutable à l'état conducteur par un signal appliqué sur le conducteur de colonne associé pendant que le conducteur de ligne (16) correspondant est à une première tension (16) prédéterminée au-dessus d'une valeur de maintien (Vr) fournie par une alimentation électrique, et en ce que la coupure de tous les thyristors d'une ligne est obtenue en abaissant la tension sur le conducteur de ligne à une seconde valeur (Vo) inférieure à la valeur de maintien de sorte que le circuit maintient la source reliée à l'alimentation électrique, sans passage de courant par le conducteur de colonne, jusqu'à abaissement de la tension sur le conducteur de ligne.

2. Dispositif selon la revendication 1, caractérisé en ce que le circuit comprend plusieurs thyristors ($40_1$, $40_2$, $40_3$) placés en parallèle, fournissait chacun un courant prédéterminé à la source lorsqu'il est à l'état conducteur, tous les thyristors étant reliés à une même alimentation et étant indépendamment commutables à l'état conducteur.

3. Dispositif selon la revendication 2, caractérisé en ce que tous les thyristors ($40_1$, $40_2$, $40_3$) sont identiques et en ce que les thyristors associés à une même source sont en série avec des résistances (12) de valeurs différentes.

4. Dispositif selon la revendication 1, caractérisé, en ce qu'une source comprend au moins deux sources ayant des longueurs d'onde d'émission différentes, placées chacune en série avec un thyristor respectif indépendamment commutable à l'état conducteur

5. Dispositif d'affichage optique comportant plusieurs sources, avantageusement constituées par des diodes électroluminescentes, réparties en lignes et colonnes aux noeuds d'un réseau régulier, associées chacune à un circuit électronique statique bistable permettant d'allumer la source en réponse à un signal de commande appliqué temporairement sur un conducteur de colonne, caractérisé en ce que les sources sont distribuées en jeux de 2k sources (10), en ce que lesdits circuits sont regroupés dans un circuit intégré (44) par jeu, ledit circuit intégré comportant plusieurs générateurs de courant (56) destinés chacun à fournir un courant ajustable à l'une des deux 2k sources et en ce que les conducteurs de colonne (46) constituent des bus associés aux circuits intégrés d'une même colonne adressant individuellement chacune des 2k sources et fournissant des données de commande aux générateurs de courant respectifs (56), les circuits intégrés (44) étant prévus pour maintenir chacune des sources (10) allumée en la reliant à une alimentation indépendante des conducteurs de colonne (46) une fois qu'elle est alimentée par son générateur de courant, jusqu'à réception d'un signal d'extinction.

6. Dispositif selon la revendication 5, caractérisé en ce que les données de commande représentent les intensités de courant à fournir par les générateurs de courant respectifs.

7. Dispositif selon la revendication 5 ou 6, caractérisé en ce que les conducteurs de ligne comprennent au moins un conducteur de validation ($\overline{ST}$) par circuit intégré.

8. Dispositif selon la revendication 6, caractérisé en ce que chaque bus (46) comprend un nombre de conducteurs juste suffisant pour fournir soit une adresse, soit une donnée, et en ce que les conducteurs de ligne associés à un circuit intégré (44) comprennent également un conducteur de sélection donnée/adresse ($\overline{A}$/D).

9. Dispositif selon la revendication 6 ou 8, caractérisé en ce que chaque circuit intégré (44) comprend des moyens (51,52) pour régler la valeur maximale des courants fournis par les générateurs de courant (56), en réponse à une donnée fournie par les conducteurs de ligne ($\overline{A}$/D) et de colonne (46) à tous les circuits intégrés (56) du dispositif en même temps, et en ce que lesdites données représentant les intensités de courant identifient un pourcentage de la valeur maximale.

10. Dispositif selon l'une quelconque des revendications 5 à 9, caractérisé en ce que chacune des sources (10) comprend au moins deux jonctions DEL émettant à des longueurs d'onde différentes et en ce que chacun des circuits intégrés (44) comprend des générateurs de courant différents (56) alimentant les différentes jonctions.

**Claims**

1. Optical display device comprising a large plurality of light sources, advantageously constituted by light emitting diodes distributed at the nodal points of a lattice and each associated to a bistable static electronic circuit making it possible to light the source responsive to a control signal temporarily applied on a column line corresponding to the source,
    characterized in that the circuit associated to each source (10) is constituted by at least one thyristor (14) switchable to conductive condition by a signal applied on the associated column line while the corresponding row line (16) is at a first predetermined voltage above a hold value (Vr) delivered by an electric supply and in that cut-off of all thyristors of a row is obtained by lowering the voltage on the row line to a second value (Vo) lower than the hold value, whereby the circuit maintains the source connected to the electric supply, without any current flow in the column line, until the voltage on the row line is lowered.

2. Device according to claim 1,
    characterized in that the circuit comprises a plurality of thyristors ($40_1$, $40_2$, $40_3$) connected in parallel relation, each delivering a predetermined current to said source when it is in conductive condition, all thyristors being connected to a same supply and being independently switchable into conductive condition.

3. Device according to claim 2,
    characterized in that all thyristors ($40_1$, $40_2$, $40_3$) are mutually identical and in that the thyristors associated with a same source are in series with resistors (12) having different values.

4. Device according to claim 1,
    characterized in that a source comprises at least two sources having different emission wavelengths, each in series relation with a respective thyristor independently switchable to conductive condition.

5. Optical display device having a plurality of sources, advantageously constituted by light emitting diodes, distributed in rows and columns at the nodal points of a regular lattice, each associated with a bistable static electronic circuit making it possible to light the source responsive to a control signal temporarily applied on a column line,
    characterized in that the sources are distributed in sets of 2k sources (10), in that said circuits are grouped into one integrated circuit (44) per set, said integrated circuit comprising a plurality of current generators (56) each for delivering an adjustable current to one of the 2k sources and in that the column lines (46) constitute bus lines associated to the integrated circuits of a same column, individually addressing each of the 2k sources and delivering control data to the respective current generators (56), the integrated circuits (44) being arranged for maintaining each of the sources (10) lighted by connecting it to a power supply independent of the column lines (46) after it is fed by its current generator, until a cut-off signal is received.

6. Device according to claim 5,
characterized in that the control data represent the current values to be delivered by the respective current generators.

7. Device according to claim 5 or 6,
characterized in that the row lines comprise at least one strobe line ($\overline{ST}$) per integrated circuit.

8. Device according to claim 6,
characterized in that each bus line (46) comprises lines whose number is just enough for delivering either an address or a data and in that the row lines associated to an integrated circuit (44) further comprise a line for data/address selection ($\overline{A}$/D).

9. Device according to claim 6 or 8,
characterized in that each integrated circuit (44) comprises means (51,52) for adjusting the maximum value of the currents delivered by the current generators (56) responsive to a data delivered by the row lines ($\overline{A}$/D) and the column lines (46) to all integrated circuits (56) of the device simultaneously and in that said data representing the current values indicate a percentage of the maximum value.

10. Device according to any one of claims 5-9,
characterized in that each of the sources (10) comprises at least two LED junctions emitting at different wavelengths and in that each of the integrated circuits (44) comprises different current generators (56) driving the different junctions.

**Patentansprüche**

1. Optische Anzeigevorrichtung mit einer großen Zahl von Lichtquellen, die vorzugsweise aus Leuchtdioden gebildet sind, auf die Knotenpunkte einer Matrix verteilt sind und jeweils mit einer statischen, bistabilen elektronischen Schaltung verbunden sind, die ermöglicht, die Lichtquelle als Antwort auf ein vorübergehend an einen der Lichtquelle entsprechenden Spaltenleiter angelegtes Steuersignal einzuschalten, dadurch gekennzeichnet, daß die jeder Lichtquelle (10) zugeordnete Schaltung aus wenigstens einem Thyristor (14) gebildet ist, der durch ein Signal in den leitenden Zustand steuerbar ist, das an den zugeordneten Spaltenleiter angelegt wird, während der entsprechende Zeilenleiter (16) auf einer von einer elektrischen Stromversorgung gelieferten, oberhalb eines Erhaltungwertes (Vr) vorbestimmten ersten Spannung liegt, und daß die Abschaltung aller Thyristoren einer Zeile durch Senken der Spannung auf dem Zeilenleiter auf einen unterhalb des Erhaltungswerts liegenden zweiten Wert (Vo) gesenkt wird, so daß die Schaltung die Lichtquelle, ohne Stromfluß durch den Spaltenleiter, bis zum Absenken der Spannung auf dem Zeilenleiter mit der elektrischen Stromversorgung verbunden hält.

2. Vorrichtung nach Anspruch 1, dadurch gekennzeichnet, daß die Schaltung mehrere parallel angeordnete Thyristoren ($40_1$, $40_2$, $40_3$) aufweist, von denen jeder einen vorbestimmten Strom an die Lichtquelle liefert, solange er sich im leitenden Zustand befindet, wobei alle Thyristoren mit ein und derselben Stromversorgung verbunden sind und unabhängig voneinander in den leitenden Zustand schaltbar sind.

3. Vorrichtung nach Anspruch 2, dadurch gekennzeichnet, daß alle Thyristoren ($40_1$, $40_2$, $40_3$) identisch sind und daß die einer gleichen Lichtquelle zugeordneten Thyristoren mit Widerständen (12) unterschiedlichen Wertes in Reihe geschaltet sind.

4. Vorrichtung nach Anspruch 1, dadurch gekennzeichnet, daß eine Lichtquelle wenigstens zwei Lichtquellen unterschiedlicher Wellenlänge aufweist, wobei jede mit einem zugehörigen, unabhängig in den leitenden Zustand schalbaren Thyristor verbunden ist.

5. Optische Anzeigevorrichtung mit mehreren Lichtquellen, die vorzugsweise aus Leuchtdioden gebildet sind, die in Zeilen und Spalten auf Knotenpunkte einer regelmäßigen Matrix verteilt sind und jeweils einer statischen, bistabilen elektronischen Schaltung zugeordnet sind, die ermöglicht, die Lichtquelle als Antwort auf ein vorübergehend an einen Spaltenleiter angelegtes Steuersignal anzuschalten, dadurch gekennzeichnet, daß die Lichtquellen in Sätze von 2k Lichtquellen (10) aufgeteilt sind, daß die Schaltungen je Satz in einer integrierten Schaltung (44) zusammengefaßt sind, wobei die integrierte Schaltung mehrere Stromquellen (56) aufweist, von denen jede dazu bestimmt ist, einen einstellbaren Strom an eine der beiden 2k Lichtquellen zu liefern, und daß die Spaltenleiter (46) den integrierten Schaltungen ein und derselben Spalte zugeordnete Busse darstellen, die jede der 2k Lichtquellen individuell ansteuern und den jeweiligen Stromquellen (56) Steuerdaten liefern, wobei die integrierten Schaltungen (44) derart ausgelegt sind, daß jede der Lichtquellen (10) im eingeschalteten Zustand gehalten wird, in dem sie bis zum Empfang eines Löschsignals mit einer von den Spaltenleitern (46) unabhängigen Stromversorgung verbunden wird, nachdem sie von der zugehörigen Stromquelle versorgt worden ist.

6. Vorrichtung nach Anspruch 5, dadurch gekennzeichnet, daß die Steuerdaten die Stromstärke des von den jeweiligen Stromquellen zu liefernden Stroms darstellen.

7. Vorrichtung nach Anspruch 5 oder 6, dadurch gekennzeichnet, daß die Zeilenleiter je integrierter Schaltung wenigstens einen Freigabeleiter ($\overline{ST}$) aufweisen.

8. Vorrichtung nach Anspruch 6, dadurch gekennzeichnet, daß jeder Bus (46) gerade soviel Leiter aufweist, wie zum Liefern einer Adresse bzw. von Daten erforderlich ist, und daß die einer integrierten Schaltung (44) zugeordneten Zeilenleiter einen Daten-/Adreß-Auswahlleiter ($\overline{A}$/D) aufweisen.

9. Vorrichtung nach Anspruch 6 oder 8, dadurch gekennzeichnet, daß jede integrierte Schaltung (44) Mittel (51,52) zum Regeln des von den Stromquellen (56) gelieferten Stroms als Antwort auf von den Zeilenleitern ($\overline{A}$/D) und den Spaltenleitern (46) an alle integrierten Schaltungen (56) der Vorrichtung gleichzeitig gesandten Daten aufweist und daß die die Stromstärken darstellenden Daten einen Prozentsatz des Maximalwerts angeben.

10. Vorrichtung nach einem der Ansprüche 5 bis 9, dadurch gekennzeichnet, daß jede der Lichtquellen (10) wenigstens zwei Leuchtdioden-Übergänge aufweist, die mit unterschiedlichen Wellenlängen aussenden, und daß jede der integrierten Schaltungen (44) unterschiedliche, die verschiedenen Übergänge versorgende Stromquellen (56) aufweist.

FIG.1

FIG 2

# FIG.3.

FIG.4.

$\overline{A}/D$

$\overline{ST}$

Val

FIG.6.

FIG.5.